# EUROPEAN PATENT SPECIFICATION

(11) **EP 4 365 039 B1**
(45) Date of publication and mention of the grant of the patent: **19.11.2025**
(21) Application number: 23193641.0
(22) Date of filing: 28.08.2023
(51) Int. Cl.: B60T 7/22, B60W 30/09, B60W 30/095, G01S 15/931

(54) **AUTOMATIC BRAKE CONTROLLER OF VEHICLE**
AUTOMATISCHE BREMSSTEUERUNG FÜR EIN FAHRZEUG
DISPOSITIF DE COMMANDE DE FREIN AUTOMATIQUE DE VÉHICULE

(30) Priority: 01.11.2022 JP 2022175641
(43) Date of publication of application: 08.05.2024
(73) Proprietor: Suzuki Motor Corporation, Hamamatsu-shi, Shizuoka 432-8611 (JP)
(72) Inventor: NAKASEKO, Yu, HAMAMATSU-SHI, 432-8611 (JP)
(74) Representative: Plasseraud IP

(56) References cited:
- JP-A- 2015 047 045
- US-A1- 2012 239 266
- US-B2- 10 124 776

## Description

### BACKGROUND OF THE INVENTION

### Field of the Invention

The present invention relates to a vehicular automatic brake controller that uses an ultrasonic sensor for external detection.

### Description of the Related Art

A known automatic brake controller to be mounted on a vehicle uses a camera and a millimeter wave radar. This combination of the camera and the millimeter wave radar is expected to demonstrate excellent detection performance for vehicular external detection.

Patent Document 1 discloses a vehicle driving support system that includes a camera and a radar sensor and detects information items such as presence of a preceding vehicle ahead of the own vehicle and an inter-vehicular distance between the own vehicle and the preceding vehicle on the basis of target object information obtained by these two sensors.

An automatic brake controller is known from US 2012/239266 A1.

[Patent Document 1] JP 2021-172210 A

However, in reality, the combination of the camera and the millimeter wave radar cannot provide sufficient detection performance depending on the situation. For example, sufficient detection performance cannot be provided in a situation where an obstacle to be detected as a detection target is relatively close to the own vehicle and the movement speed of this obstacle relative to the own vehicle is low, as exemplified by a parking lot.

Accordingly, in order to prevent accidents in the above-described situation including a parking lot, it has been proposed to use an ultrasonic sensor, which is excellent in detecting external environment in the situation of short-distance and low-speed, as a sensor for the automatic brake controller.

In actual braking, there is an idle running time between: the timing when the automatic brake controller recognizes presence of an obstacle and instructs application of the automatic brake due to the possibility of collision with the obstacle; and the timing when the braking force is actually applied by the automatic brake. This idle running time is caused by boosting delay until various actuators such as a pump motor respond to the instruction and brake fluid pressure reaches the pressure required for generating the braking force.

During the idle running time, the braking force is not practically obtained and the detection range of the ultrasonic sensor is limited to short distance of about several meters, which limits the vehicle speed at which the automatic brake controller using the ultrasonic sensor can be applied.

Under such circumstances, there is a demand for a technique that uses an ultrasonic sensor for detecting the external environment and enables the automatic brake to: be applied appropriately even at a higher vehicle speed; or be applied at a more appropriate timing regardless of the vehicle speed.

### SUMMARY OF THE INVENTION

An object of the present invention is to provide a technique for an automatic brake controller using an ultrasonic sensor, which enables an automatic brake to: be applied appropriately even at a higher vehicle speed; or be applied at a more appropriate timing regardless of the vehicle speed.

In order to solve the above-mentioned problem, according to one aspect of the present invention, an automatic brake controller is provided, which includes: an ultrasonic sensor mounted on a vehicle and configured to emit an ultrasonic wave in a traveling direction of the vehicle toward an obstacle; and an automatic brake unit configured to automatically generate braking force of the vehicle based on reflection intensity of the ultrasonic wave detected by the ultrasonic sensor. The automatic brake unit includes: a pre-boosting unit configured to increase brake fluid pressure related to generation of the braking force or activate a pump motor related to adjustment of the brake fluid pressure, when the reflection intensity is larger than a predetermined first threshold; and a brake activation unit configured to actually generate the braking force when the reflection intensity is larger than a predetermined second threshold that is larger than the first threshold.

Preferably, the automatic brake unit is configured to increase the brake fluid pressure or activate the pump motor by the pre-boosting unit on condition that vehicle speed of the vehicle is equal to or higher than a predetermined first speed.

Preferably, the automatic brake controller further includes a vehicle speed sensor configured to detect vehicle speed of the vehicle, and the automatic brake unit is configured to determine whether the vehicle speed detected by the vehicle speed sensor is equal to or higher than a predetermined first speed; and increase the brake fluid pressure or activate the pump motor by the pre-boosting unit in a case where the detected vehicle speed is determined to be equal to or higher than the first speed.

The first threshold may be set depending on vehicle speed of the vehicle or distance to the obstacle from the vehicle, and in such case, preferably set to decrease as the vehicle speed increases or as the distance to the obstacle decreases.

Preferably, the automatic brake unit is configured to generate the braking force by the brake activation unit on condition that vehicle speed of the vehicle is equal to or lower than a predetermined second speed.

Preferably, the automatic brake controller further includes a vehicle speed sensor configured to detect vehicle speed of the vehicle, and the automatic brake unit is configured to determine whether the vehicle speed detected by the vehicle speed sensor is equal to or lower than a predetermined second speed, and generate the braking force by the brake activation unit in a case where the detected vehicle speed is determined to be equal to or lower than the second speed.

Preferably, the second speed is higher than the first speed.

Preferably, the pre-boosting unit is configured to increase the brake fluid pressure or activate the pump motor, in a case of receiving an ultrasonic wave with reflection intensity larger than the first threshold for a predetermined first number of times by the ultrasonic sensor; and the brake activation unit is configured to generate the braking force in a case of receiving an ultrasonic wave with reflection intensity larger than the second threshold for a predetermined second number of times by the ultrasonic sensor.

Preferably, the first number of times is equal to or smaller than the second number of times.

Preferably, the first number of times is set to decrease as time length taken until the vehicle reaches the obstacle decreases, and in such case, the first number of times is set to be equal to the second number of times when the time length taken until the vehicle reaches the obstacle is longer than a predetermined time length.

### EFFECT OF THE INVENTION

According to the present invention, before the braking force is actually generated, the brake fluid pressure can be increased in advance, or the pump motor can be operated in advance in preparation for the actual increase in the brake fluid pressure. As a result, an idle running time until the actual generation of the braking force can be shortened, which enables the automatic brake to: be applied appropriately even at a higher vehicle speed; or be applied at a more appropriate timing regardless of the vehicle speed.

### BRIEF DESCRIPTION OF THE DRAWINGS

In the accompanying drawings:
Fig. 1 is a schematic diagram illustrating an overall configuration of a vehicle control apparatus provided with an automatic brake controller according to one embodiment of the present invention;
Fig. 2 is a schematic diagram illustrating a configuration of a fluid-pressure control unit of the automatic brake controller according to the embodiment;
Fig. 3 is a flowchart illustrating an overall flow of automatic brake control to be performed by the automatic brake controller according to the embodiment;
Fig. 4 is a flowchart illustrating contents of automatic brake control at high speed (in the step S104) in the automatic braking control;
Fig. 5 is a flowchart illustrating contents of automatic brake control at low speed (in the step S105) in the automatic brake control;
Fig. 6 is a schematic diagram illustrating: change in ultrasonic reflection intensity I with respect to distance D from the own vehicle to an obstacle; and setting of a first threshold Iths1 and a second threshold Iths2;
Fig. 7 is a schematic diagram illustrating setting of determination reception count Np and determination reception count Ns with respect to the distance D from the own vehicle to the obstacle;
Fig. 8 is a schematic diagram illustrating respective changes in control request, brake fluid pressure Poil, and vehicle deceleration DCL in the case of the automatic brake controller according to one embodiment of the present invention; and
Fig. 9 is a schematic diagram illustrating respective changes in control request, brake fluid pressure Poil, and vehicle deceleration DCL in the case of a vehicular automatic brake controller that is a comparative example.

### DETAILED DESCRIPTION

Hereinbelow, embodiments of the present invention will be described by referring to the accompanying drawings.

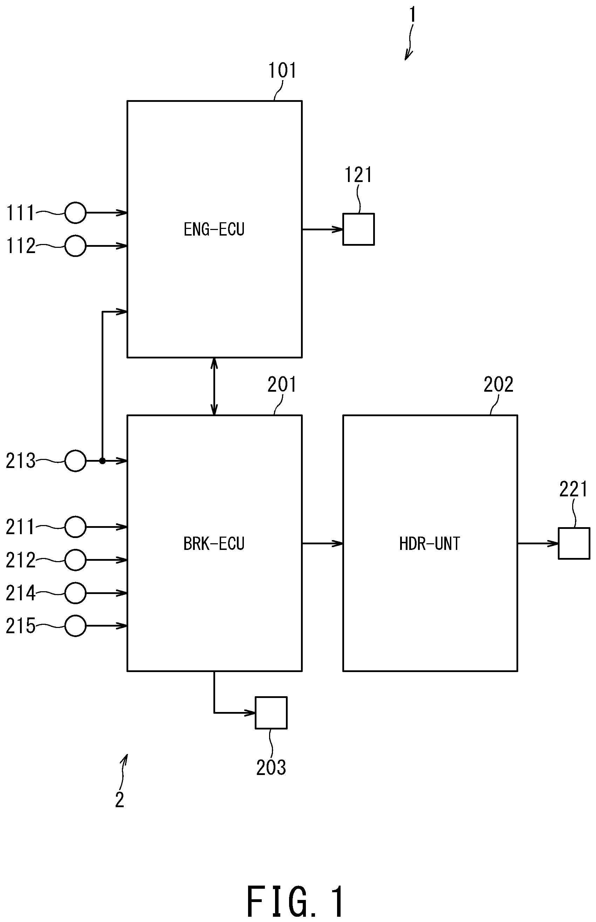

Fig. 1 is a schematic diagram illustrating an overall configuration of a vehicle control apparatus 1 according to one embodiment of the present invention.

The vehicle control apparatus 1 controls acceleration, deceleration, and steering of the vehicle, i.e., controls the overall behavior of the vehicle. In the present embodiment, the vehicle uses an internal combustion engine (not shown, hereinafter simply referred to as "the engine") as a drive source for traveling. The vehicle is not limited to this aspect but may be an electric vehicle using an electric motor as a driving source or a hybrid vehicle using an engine and an electric motor as driving sources.

The vehicle control apparatus 1 includes an automatic brake controller 2 according to the present embodiment. When the automatic brake controller 2 of the vehicle detects presence of an obstacle in the traveling direction of the vehicle (hereinafter referred to as "the own vehicle" as appropriate in order to distinguish it from obstacles), the automatic brake controller 2 of the vehicle determines whether there is a possibility of collision with this obstacle or not. When it is determined that there is a possibility of collision, the automatic brake controller 2 of the vehicle performs control by which the braking force of the vehicle is automatically generated regardless of operation on the brake pedal by the driver (hereinafter, this control is referred to as "the automatic brake control"). The traveling direction of the vehicle may be the forward direction or the rearward direction.

Next, a description will be given of the outline of automatic brake control according to the present embodiment.

The automatic brake controller 2 (i.e., brake controller 201 described below in the case of the present embodiment) monitors signal intensity of a reflected wave of an ultrasonic wave emitted from the ultrasonic sensor 211, i.e., reflection intensity of the ultrasonic wave on the basis of output information from the ultrasonic sensor 211. When detecting presence of an obstacle in the traveling direction of the own vehicle from the reflection intensity, on the condition that similar detection results based on the reflection intensity are obtained a plurality of times (for example, three times), the automatic brake controller 2 determines (i.e., fixes) the detection result that the presence of the obstacle has been detected.

Further, the automatic brake controller 2 determines the attribute of the detected obstacle from the output information of the ultrasonic sensor 211, and then identifies whether the detected obstacle is an obstacle with which collision should be avoided or not (i.e., whether collision with this obstacle should be avoided or not).

Obstacles with which collisions should be avoided include other vehicles in the traveling direction of the own vehicle, i.e. preceding vehicles as well as pedestrians and installed objects on the road.

When the detected obstacle is an obstacle with which collision should be avoided, the automatic brake controller 2 predicts its movement trajectory from the movement of the detected obstacle and calculates collision prediction time, which is a predicted time length until the own vehicle collides with the detected obstacle.

The collision prediction time can be calculated on the basis of the distance from the own vehicle to the obstacle and the vehicle speed of the own vehicle.

The substantial distance to the obstacle can be calculated by reflecting the predicted movement trajectory of the obstacle in this calculation, and thereby the calculation accuracy of the collision prediction time can be improved.

When the collision prediction time is shorter than a predetermined time length, it is determined that there is a high possibility that the own vehicle collides with the obstacle, and the automatic braking is applied to avoid collision with the obstacle.

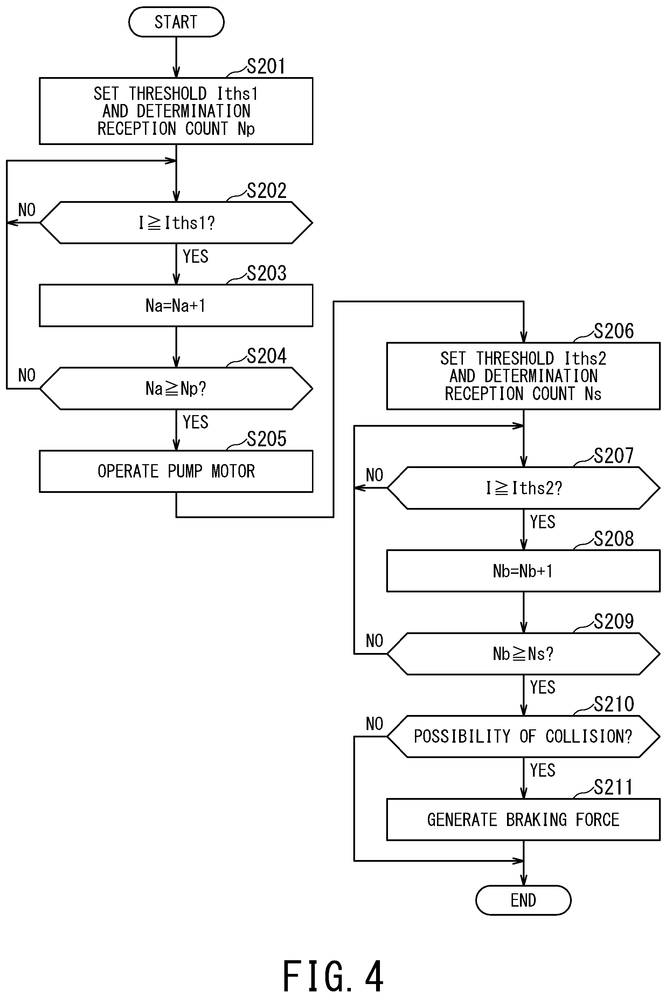

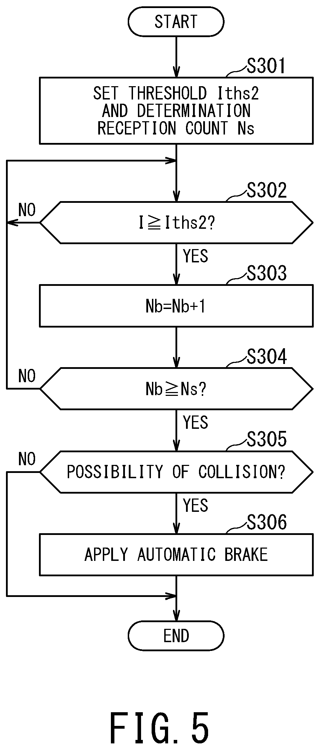

In the present embodiment, when confirming the above-described detection results, multiple determination is performed by comparing the reflection intensity with a plurality of thresholds Iths1 and Iths2 (Fig. 4 and Fig. 5).

The vehicle control apparatus 1 includes an engine controller 101 and a brake controller 201. The automatic brake controller 2 of the vehicle includes: the brake controller 201; a fluid-pressure control unit 202; and various sensors and actuators, both of which are related to the automatic brake control.

The engine controller 101 controls the operation of the engine. The control target of the engine controller 101 includes a fuel injector 121. The engine controller 101 reads in various sensor output information items related to engine control, performs predetermined calculation on the basis of these information items, and outputs calculated actuator operation amount to a predetermined engine control device. For example, the engine controller 101 calculates fuel supply amount to be supplied to the engine, and outputs fuel-injector operation amount corresponding to the fuel supply amount to the fuel injector 121. The fuel injector 121 operates depending on the fuel-injector operation amount, and supplies the engine with the fuel, amount of which is dependent on the fuel supply amount.

The engine controller 101 receives sensor output information including: operation amount APO on an accelerator pedal to be detected by an accelerator sensor 111 (hereinafter referred to as "the accelerator position APO"); and intake air amount Qair of the engine to be detected by an air flow meter 112, and these are used as a basis of calculation.

The brake controller 201 controls the operation of the brake device, especially the operation related to the automatic brake control. The control targets of the brake controller 201 include: a brake element 221 configured to generate frictional force and dissipate kinetic energy of the vehicle as heat; and various actuators related to circulation of brake oil in a fluid pressure circuit and adjustment of pressure of the brake oil (hereinafter referred to as "brake fluid pressure"). The brake controller 201 reads in various sensor output information items related to the automatic brake control, performs predetermined calculation on the basis of these information items, and outputs the calculated actuator operation amount to the brake element 221 and other actuators.

In the present embodiment, the actuator related to circulation of the brake oil is, for example, a fluid pressure control valve provided in the fluid pressure circuit, and the actuator related to the adjustment of the brake fluid pressure is, for example, an electric motor (hereinafter referred to as "the pump motor") that is a drive source for an oil pump configured to raise the brake oil pressure. The fluid pressure control valve and the pump motor operate on the basis of the actuator operation amount outputted by the brake controller 201, raise the brake fluid pressure to the pressure required for generating the braking force, switch the flow of brake oil in the fluid pressure circuit, and supply the boosted brake oil to the brake element 221. The braking force acting on the vehicle increases as the brake fluid pressure increases, and decreases as the brake fluid pressure decreases.

The brake controller 201 receives sensor output information used as a basis of calculation, which includes at least: output information from the ultrasonic sensor 211; depression amount BPF of a brake pedal to be detected by a brake sensor 212 (hereinafter referred to as "the brake depression force BPF"); wheel speed WSP of the own vehicle to be detected by a wheel speed sensor 213; vehicle acceleration ACC to be detected by an acceleration sensor 214; and brake fluid pressure Poil to be detected by a fluid pressure sensor 215. The brake fluid pressure Poil is the pressure of the brake oil in the fluid pressure circuit, specifically, the pressure in the fluid pressure line on the discharge side of the oil pump.

The ultrasonic sensor 211 may be installed as an external sensor for front monitoring, for example, at the front bumper portion of the vehicle body to be able to emit ultrasonic waves toward the front of the vehicle, or may be installed as an external sensor for rear monitoring, for example, at the rear bumper portion of the vehicle body to be able to emit ultrasonic waves toward the rear of the vehicle. When the ultrasonic sensor 211 is installed at the front bumper portion, presence of an obstacle near the front of the vehicle can be detected. When the ultrasonic sensor 211 is installed at the rear bumper portion, presence of an obstacle near the rear of the vehicle can be detected. Two ultrasonic sensors 211 can be installed at the respective front bumper portion and rear bumper portion and be used for both front monitoring and rear monitoring. The detectable distance by the ultrasonic sensor 211 is, for example, within 3 meters from the own vehicle.

On the basis of the output information from the ultrasonic sensor 211, the brake controller 201 can determine presence/absence of an obstacle near the front or rear of the vehicle and can detect the distance from the own vehicle to the obstacle. Further, use of the ultrasonic sensor 211 enables determination of the attribute of the detected obstacle. The attribute of an obstacle is, for example, whether the obstacle is an object or a person. The object includes a preceding vehicle and an installed object on the road, and the person includes a pedestrian. When the brake controller 201 detects presence of an obstacle and determines that there is a possibility of collision with the obstacle, the brake controller 201 supplies the brake oil to the brake element 221 to generate the braking force of the vehicle.

The wheel speed WSP is the rotational speed of the wheels (driven wheels in the present embodiment), and is a driving state parameter that correlates with the traveling speed of the vehicle, **i.e.,** the vehicle speed VSP. The output information from the wheel speed sensor 213 is sent to both the brake controller 201 and the engine controller 101. The wheel speed sensor 213 constitutes a "vehicle speed sensor" according to the present embodiment.

The brake controller 201 is connected to a meter device 203 configured to function as a man machine interface, which is also referred to as "human machine interface **(HMI),"** in addition to the above-described components, and provides the driver with information on the operating status of the automatic brake control. The information to be provided to the driver may be visual information or auditory information.

Both the engine controller 101 and the brake controller 201 are configured as electronic control units, each of which includes a central processing unit as well as various memories and input/output interfaces, for example. The engine controller 101 and the brake controller 201 are communicably connected to each other. The sensor output information to be inputted to one of both controllers 101 and 201, such as the vehicle acceleration ACC to be inputted to the brake controller 201, can be shared between both controllers 101 and 201 by, for example, bus communication.

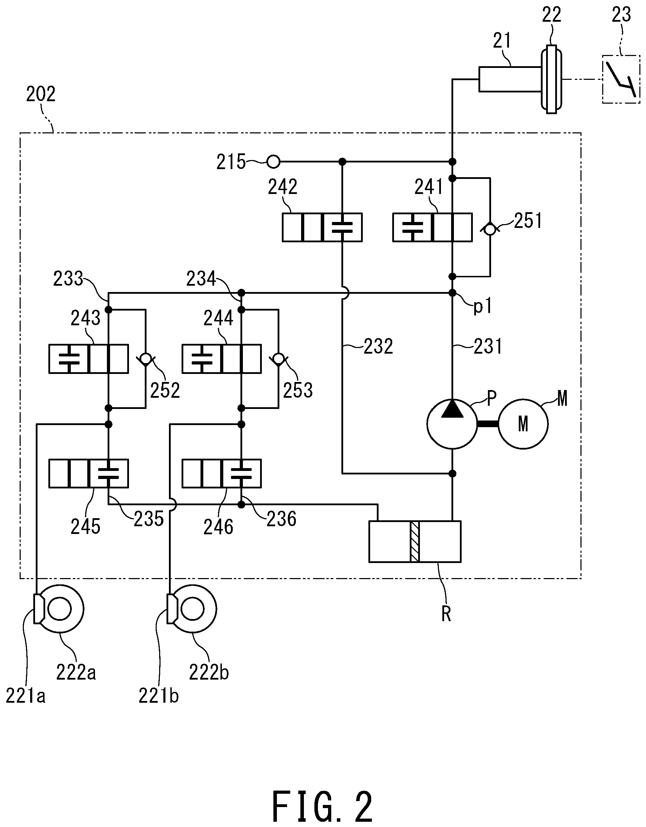

Fig. 2 is a schematic diagram illustrating a configuration of the fluid-pressure control unit 202 of the automatic brake controller 2 according to the present embodiment.

In the present embodiment, the fluid-pressure control unit 202 includes the fluid pressure circuit and various actuators provided in the fluid pressure circuit. The fluid pressure circuit fluidly connects a brake master cylinder 21 (hereinafter referred to as "the master cylinder 21"), brake elements 221 (221a, 221b), and an oil reservoir **R.** The actuators provided in the fluid pressure circuit include: the fluid pressure control valves (hereinafter simply referred to as "the valves") 241 to 246 related to the circulation of the brake oil in the fluid pressure circuit; and the pump motor M related to the adjustment of the brake fluid pressure Poil.

The brake controller 201, the fluid-pressure control unit 202, and the brake elements 221 (221a, 221b) constitute "an automatic braking unit" according to the present embodiment. The brake controller 201 constitutes "a pre-boosting unit (i.e., preliminary boosting unit)" and "a brake activation unit" according to the present embodiment.

The master cylinder 21 is connected to a brake pedal 23 via a brake booster 22. This brake booster 22 functions as a booster device that increases the pressure inside the master cylinder 21 when the driver depresses the brake pedal 23.

The brake elements 221a and 221b are, for example, brake calipers provided with pad members, and are activated by being supplied with the brake oil to press the pad members against brake discs 222a and 222b in such a manner that the friction between the pad members and the brake discs 222a and 222b generates the braking force on the vehicle.

In the present embodiment, the brake discs 222a and 222b are attached to the respective axles of the left front wheel and right rear wheel to rotate together with these wheels. The actuators and the fluid pressure circuit configured in the same manner as shown in Fig. 2 are also provided for the right front wheel and the left rear wheel (not shown), the brake discs are attached to the axles of the right front and left rear wheels, and the brake calipers as the brake elements 221 are installed such that the brake discs are sandwiched between the pad members.

In the fluid pressure circuit shown in Fig. 2, the master cylinder 21 and the oil reservoir R are connected via a first fluid pressure line 231, an oil pump P is provided in the first fluid pressure line 231, and a pump motor M is installed to be able to drive the oil pump P.

In the first fluid pressure line 231, on the discharge side of the oil pump P, a first valve 241 capable of switching between circulation and blocking of the brake oil in the first fluid pressure line 231 is provided, and a first bypass line is provided to bypass the first valve 241. The first bypass line is provided with a check valve 251 that allows the flow of the brake oil from the master cylinder 21 toward the brake elements 221a and 221b and blocks the flow of the brake oil in the opposite direction.

Of the first fluid pressure line 231, the portion between the master cylinder 21 and the first valve 241 and the portion between the oil pump P and the oil reservoir R are connected by a second fluid pressure line 232. This second fluid pressure line 232 is provided with a second valve 242 that can switch circulation and blocking of the brake oil in the second fluid pressure line 232.

Of the first and second fluid pressure lines 231 and 232, the portions between the master cylinder 21 and the first and second valves 241 and 242 are connected to the fluid pressure sensor 215 that detects the brake fluid pressure Poil in these portions.

Further, a third fluid pressure line 233 and a fourth fluid pressure line 234 are provided to branch off from the portion between the oil pump P and the first valve 241 in the first fluid pressure line 231. The third fluid pressure line 233 is connected to be able to supply the brake element 221a of the left front wheel with the brake oil, and the fourth fluid pressure line 234 is connected to be able to supply the brake element 221b of the right rear wheel with the brake oil.

The third fluid pressure line 233 is provided with a third valve 243 that can switch circulation and blocking of the brake oil in the third fluid pressure line 233, and a second bypass line is provided to bypass the third valve 243. This second bypass line is provided with a check valve 252 that blocks the flow of the brake oil from the branch point p1 of the first fluid pressure line 231 toward the brake element 221a and allows the flow of the brake oil in the opposite direction.

The fourth fluid pressure line 234 is provided with a fourth valve 244 that can switch circulation and blocking of the brake oil in the fourth fluid pressure line 234, and a third bypass line is provided to bypass the fourth valve 244. This third bypass line is provided with a check valve 253 that blocks the flow of the brake oil from the branch point p1 toward the brake element 221b and allows the flow of the brake oil in the opposite direction.

In addition to the above-described components, a first return line 235 and a second return line 236 are provided. The first return line 235 branches off from the third fluid pressure line 233 and is connected to the oil reservoir R, and the second return line 236 branches off from the fourth fluid pressure line 234 and is connected to the oil reservoir R. The first return line 235 is provided with a fifth valve 245 that can switch circulation and blocking of the brake oil in the first return line 235, and the second return line 236 is provided with a sixth valve 246 that can switch circulation and blocking of the brake oil in the second return line 236.

In the present embodiment, when there is a possibility of collision with an obstacle that exists near the front of the vehicle, the automatic brake control is performed to automatically generate the braking force of the vehicle regardless of (i.e., without depending on) the driver's operation on the brake pedal. Before actually generating the braking force, control of operating the pump motor M and increasing the brake fluid pressure Poil is performed in advance.

In the case of increasing the brake fluid pressure Poil, the pump motor M is operated and the second valve 242 is opened to be set to the circulation state, while the other valves (i.e., the first, third, fourth, fifth, and sixth valves 241, 243, 244, 245, 246) are closed to be set to the cut-off state. As a result, of the first fluid pressure line 231, the portion between the oil pump P and the first valve 241 rises in brake oil pressure. Similarly, of the third and fourth fluid pressure lines 233 and 234, the portion from the branch point p1 to the third and fourth valves 243 and 244 rises in brake oil pressure.

In the case of generating the braking force, the rotation speed of the pump motor M is increased to increase the discharge flow rate of the oil pump P, the third and fourth valves 243 and 244 are opened to be set to the circulation state, and the boosted brake oil is supplied to the brake elements 221a and 221b. As a result, the brake elements 221a and 221b are hydraulically operated, and the pad members are pressed against the brake discs 222a and 222b to generate the braking force. After the generation of the braking force is completed and the vehicle stops, the pump motor M is stopped and the first valve 241 is closed to be set to the cut-off state, and thereby the brake fluid pressure Poil in the fluid pressure line from the oil pump P to the brake elements 221a and 221b is maintained at the post-boost pressure to maintain the braking force.

In the case of finishing the automatic brake control and releasing the automatic brake, the first valve 241 is opened to be set to the circulation state.

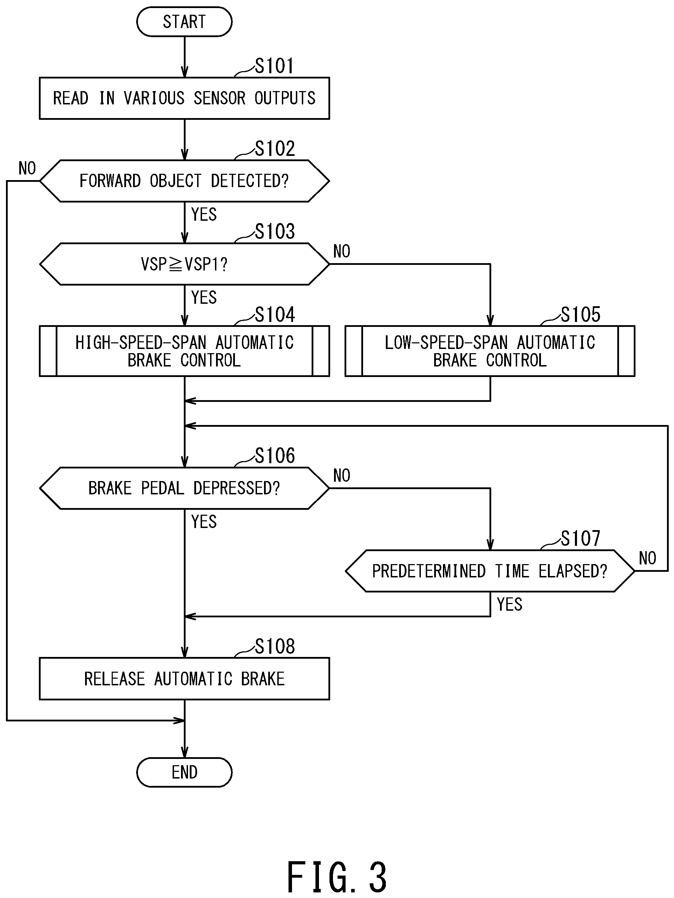

Fig. 3 is a flowchart illustrating an overall flow of the automatic brake control to be performed by the automatic brake controller 2 of the vehicle according to the present embodiment. Under the condition that the vehicle is traveling at a speed lower than a predetermined vehicle speed VSP2, the automatic brake control is repeatedly executed by the brake controller 201 at predetermined time intervals. The vehicle speed VSP2 is, for example, a speed of around 10 km/h, and corresponds to "the second speed" according to the present embodiment.

In the step S101, various sensor output information items are read in.

In the step S102, on the basis of the output information from the ultrasonic sensor 211, it is determined whether there is an obstacle (hereinafter referred to as "the forward obstacle") in the traveling direction of the vehicle, for example, in front of the vehicle or not. If the forward obstacle is present, the processing proceeds to the step S103. Otherwise, the control in this routine is completed. In the present embodiment, the determination by the processing shown in the step S102 is provisional determination based on detection of reflected waves from the forward obstacle.

In the step S103, it is determined whether the vehicle speed VSP is equal to or higher than the predetermined vehicle speed VSP1. If the vehicle speed VSP is equal to or higher than the predetermined vehicle speed VSP1, the processing proceeds to the step S104. If the vehicle speed VSP is lower than the predetermined vehicle speed VSP1, the processing proceeds to the step S105. The vehicle speed VSP1 corresponding to "the first speed" according to the present embodiment is lower than the vehicle speed VSP2, and is, for example, an extremely low speed of about 5 km/h.

In the step S104, automatic brake control at high speed (i.e., automatic brake control in a period during which the vehicle speed is high, which is hereinafter referred to as "high-speed-span automatic brake control") is performed on the basis of the procedure shown in the flowchart of Fig. 4.

In the step S105, automatic brake control at low speed (i.e., automatic brake control in a period during which the vehicle speed is low, which is hereinafter referred to as "low-speed-span automatic brake control") is performed on the basis of the procedure shown in the flowchart of Fig. 5.

In the step S106, it is determined whether the brake pedal is depressed by the driver or not. If the brake pedal is depressed, the processing proceeds to the step S108 to shift to normal brake control. If the brake pedal is not depressed, the processing proceeds to the step S107.

In the step S107, it is determined whether a predetermined time has elapsed after generation of the braking force by the automatic brake control or not. If the predetermined time has elapsed, the processing proceeds to the step S108. If the predetermined time has not elapsed, the processing proceeds returns to the step S106 and the processing of the steps S106 and S107 is repeated. The predetermined time is, for example, the elapsed time length from the timing at which the vehicle stops after generation of the braking force by the automatic brake control, and is, for example, about 2 to 3 seconds. In other words, in the present embodiment, after stop of the vehicle due to the automatic brake control, until the predetermined time elapses, the automatic brake control is continued to maintain the braking force. If the brake pedal is depressed by the driver even before elapse of the predetermined time, the automatic brake control is completed and it shifts to the normal brake control.

In the step S108, the automatic brake control is completed and the automatic brake is released.

Fig. 4 is a flowchart illustrating contents of processing (i.e., high-speed-span automatic brake control) to be executed in the step S104 of the flowchart shown in Fig. 3.

In the step S201, a threshold Iths1 related to the ultrasonic reflection intensity I and number of determination reception times Np (i.e., determination reception count Np) related to primary determination of obstacle detection are read in.

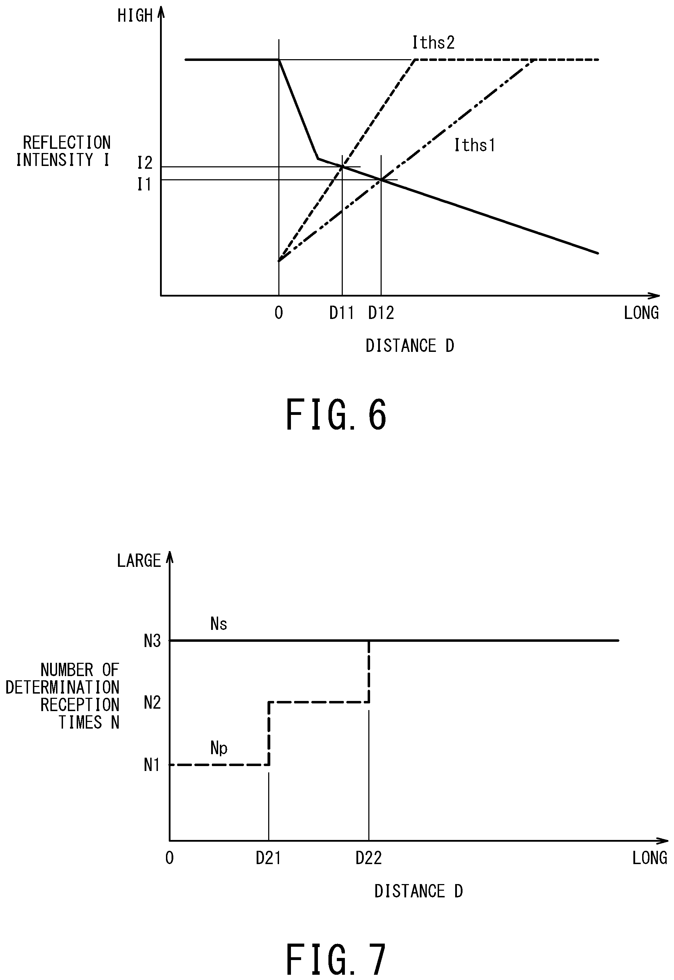

Fig. 6 is a schematic diagram illustrating: change in ultrasonic reflection intensity I with respect to the distance D from the own vehicle to the obstacle; and setting of thresholds Iths1 and Iths2. The threshold Iths1 corresponds to "the first threshold" according to the present embodiment, and the threshold Iths2 corresponds to "the second threshold" according to the present embodiment. The thresholds Iths1 and Iths2 are set as functions of the distance D and stored in the brake controller 201. Fig. 6 shows the threshold Iths1 by a two-dot chain line and shows the threshold Iths2 by a dashed line.

The distance D can be detected by calculation based on the output information from the ultrasonic sensor 211. As shown in Fig. 6, the threshold Iths1 is set to a smaller threshold as the distance D is shorter, i.e., as the vehicle approaches the obstacle.

In the present embodiment, the distance D is adopted as an indicator (i.e., index) of the predicted time length until the vehicle collides with an obstacle (hereinafter referred to as "the collision prediction time"). Thus, the vehicle speed VSP may be used instead of or in addition to the distance D so that the threshold Iths1 is set to a lower value as the vehicle speed VSP becomes higher (i.e., as the collision prediction time becomes shorter).

Fig. 7 is a schematic diagram illustrating setting of number of determination reception times Np and Ns with respect to the distance D from the own vehicle to the obstacle. The number of determination reception times Np (hereinafter referred to as the determination reception count Np) corresponds to "first number of times" according to the present embodiment, and the number of determination reception times Ns (hereinafter referred to as the determination reception count Ns) corresponds to "second number of times" according to the present embodiment. Each of the determination reception counts Np and Ns is set as a function of the distance D and stored in the brake controller 201. In Fig. 7, the determination reception count Np is indicated as a dashed line, and the determination reception count Ns is indicated as a solid line.

As shown in Fig. 7, the determination reception count Np is set as the number of times equal to or less than the determination reception count Ns over the entire distance D at which the ultrasonic sensor 211 can detect an obstacle. The determination reception count Np is set to a smaller number of times as the distance D is shorter (i.e., as the vehicle approaches the obstacle).

The distance D is adopted as an indicator (i.e., index) of the collision prediction time. Similarly to the thresholds Iths1 and Iths2, the determination reception count Np may be set as a smaller number of times as the vehicle speed VSP is higher (i.e., as the collision prediction time is shorter), by adopting the vehicle speed VSP instead of or in addition to the distance D.

In the step S202, it is determined whether the ultrasonic reflection intensity I (i.e., the signal intensity of the reflected wave from the forward obstacle) is equal to or larger than the threshold Iths1. If the ultrasonic reflection intensity I is equal to or larger than the threshold Iths1, the processing proceeds to the step S203. If the ultrasonic reflection intensity I is smaller than the threshold Iths1, the processing shown in the step S202 is repeated.

In the step S203, the number of times Na of receiving an ultrasonic wave with the reflection intensity I larger than the threshold Iths1 (hereinafter referred to as "the ultrasonic reception count Na") is incremented by 1.

In the step S204, it is determined whether the ultrasonic reception count Na has reached the determination reception count Np or not. If the ultrasonic reception count Na has reached the determination reception count Np, the processing proceeds to the step S205. Otherwise, the processing returns to the step S202 and the processing from the step S202 to the step S204 is repeated.

In the step S205, the pump motor M is operated. In the present embodiment, as described above, the second valve 242 is opened together with or in conjunction with the operation of the pump motor M. Under the operation of the pump motor M, the brake fluid pressure Poil may be increased to the pressure required for generating the braking force or be slightly increased by a pressure of about 3 bar. Additionally or alternatively, the pump motor M may be operated in an idle state without substantial increase in the brake fluid pressure Poil.

In the step S206, the threshold Iths2 related to the ultrasonic reflection intensity I and the determination reception count Ns related to the secondary determination of obstacle detection are read in.

In the present embodiment, as shown in Fig. 6, the threshold Iths2 is set to a smaller threshold as the distance D becomes shorter (i.e., as the vehicle approaches the obstacle). The threshold Iths2 is larger than the threshold Iths1 when being compared under equal distance D.

In the present embodiment, the determination reception count Ns is set to a constant number with respect to the distance D, as shown in Fig. 7. For the distance D longer than a predetermined distance D22, the determination reception count Ns is equal to the determination reception count Np.

In the step S207, it is determined whether the ultrasonic reflection intensity I is equal to or larger than the threshold Iths2. If the ultrasonic reflection intensity I is equal to or larger than the threshold Iths2, the processing proceeds to the step S208. If the ultrasonic reflection intensity I is smaller than the threshold Iths2, the processing shown in the step S207 is repeated.

In the step S208, the number of times Nb of receiving an ultrasonic wave with the reflection intensity I larger than the threshold Iths2 (hereinafter referred to as "the ultrasonic reception count Nb") is incremented by 1.

In the step S209, it is determined whether the ultrasonic reception count Nb has reached the determination reception count Ns or not. If the ultrasonic reception count Nb has reached the determination reception count Ns, the processing proceeds to the step S210. Otherwise, the processing returns to the step S207 and the processing from the step S207 to the step S209 is repeated. In the present embodiment, the affirmative determination in the step S209 finally fixes the determination regarding obstacle detection, i.e., the determination that the forward obstacle is present.

In the step S210, it is determined whether there is a possibility of collision with the forward obstacle that is detected by the processing of the step S102 and is related to the determination finally fixed by the processing of the step S209. Specifically, on the basis of the output information from the ultrasonic sensor 211, the attribute of the forward obstacles is identified. When the forward obstacle is an object with which collision should be avoided, the movement trajectory of the forward obstacle is predicted, and the collision prediction time with the forward obstacle is calculated on the basis of the distance D from the own vehicle to the forward obstacle and the vehicle speed VSP. Further, if the collision prediction time is shorter than a predetermined time length, it is determined that there is a possibility of collision. If there is a possibility of collision with the forward obstacle, the processing proceeds to the step S211. Otherwise, the high-speed-span automatic brake control is completed by determining that there is no possibility of collision, and then the processing returns to the flowchart shown in Fig. 3.

In the step S211, in order to avoid collision with the forward obstacle or reduce the damage in the event of collision, the braking force is actually generated by the automatic brake control.

Fig. 5 is a flowchart illustrating contents of processing (i.e., low-speed-span automatic brake control) to be executed in the step S105 of the flowchart shown in Fig. 3.

In the present embodiment, the processing shown in the steps S301 to S306 in the flowchart of Fig. 5 is the same as the processing shown in the steps S206 to S211 in the flowchart of Fig. 4. The braking force generation in the low-speed-span automatic brake control is briefly described below.

After the threshold Iths2 and the determination reception count Ns are read in in the step S301, the ultrasonic reflection intensity I is compared with the threshold Iths2 in the step S302. If the ultrasonic reflection intensity I is equal to or larger than the threshold Iths2, the ultrasonic reception count Nb is incremented by 1 in the step S303. In the next step S304, if the ultrasonic reception count Nb reaches the determination reception count Ns, it is determined in the next step S305 whether there is a possibility of collision with the forward obstacle or not. If there is a possibility of collision, the braking force by the automatic brake control is actually generated in the step S306.

The automatic brake controller 2 of the vehicle according to the present embodiment has the above-described configuration. The effects to be obtained by the present embodiment will be described below.

Firstly, when the reflected wave of the ultrasonic wave emitted from the ultrasonic sensor 211 is received and the ultrasonic reflection intensity I (i.e., signal intensity of the reflected wave) is equal to or larger than the predetermined first threshold Iths1, for example, when the ultrasonic reflection intensity I rises from a substantially zero value and reaches the first threshold Iths1, the pump motor M is activated to increase the brake fluid pressure Poil in the fluid pressure circuit of the fluid-pressure control unit 202. Further, when the ultrasonic reflection intensity I is equal to or larger than the predetermined second threshold Iths2, for example, when the ultrasonic reflection intensity I reaches the first threshold Iths1, and then further increases after it has reached the first threshold Iths1 to reach the second threshold Iths2, the braking force is actually generated by supplying the boosted brake oil to the brake elements 221 (221a and 221b). Consequently, it is possible to enable the brake fluid pressure Poil to preliminary increase, or enable preparation for generating the braking force to preliminary proceed without substantial increase in the brake fluid pressure Poil, before the timing at which the ultrasonic reflection intensity I reaches the second threshold Iths2 and the braking force is actually applied.

As a result, on the basis of the determination that there is a possibility of collision with the obstacle existing in the traveling direction of the vehicle (for example, a forward obstacle such as the preceding vehicle), it is possible to shorten or substantially eliminate the idle running time of the vehicle, which refers to the time from the timing of instructing application of the braking force (in the step S211 in Fig. 4) to the actual effective timing of application of the braking force.

Thus, the vehicular automatic brake controller 2 using the ultrasonic sensor 211 can appropriately activate the automatic brake even at a higher vehicle speed (or a higher relative speed to the obstacle) or can activate the automatic braking at a more appropriate timing with the impact of the idle running time mitigated regardless of the vehicle speed VSP.

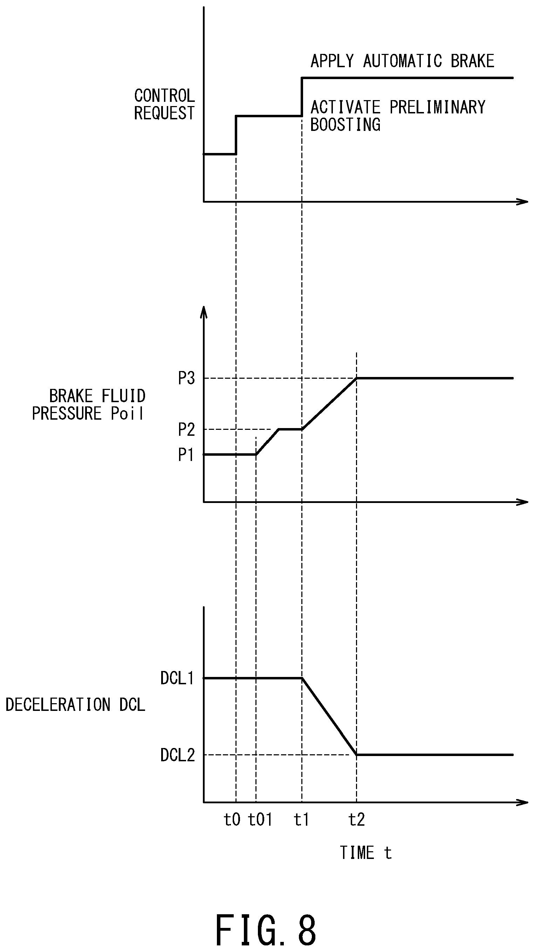

Fig. 8 is a schematic diagram illustrating respective changes in control request (preliminary pressurization activation and automatic braking activation), brake fluid pressure Poil, and vehicle deceleration DCL in the case of using the automatic brake controller 2 of the vehicle according to the present embodiment.

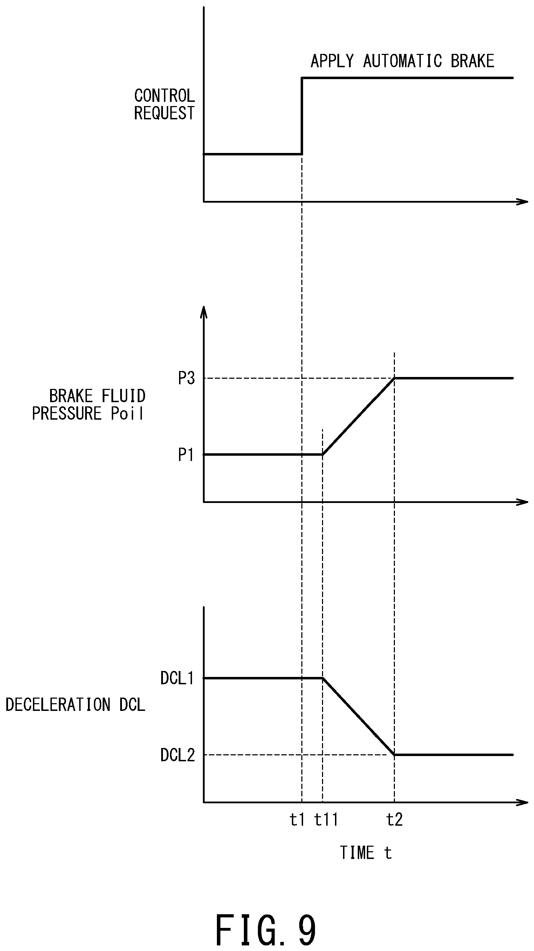

Fig. 9 is a schematic diagram illustrating respective changes in control request (automatic braking activation), brake fluid pressure Poil, and vehicle deceleration DCL in the case of using a vehicular automatic brake controller that is a comparative example. In the comparative example, preliminary pressurization is not performed, the brake fluid pressure Poil is increased in response to detection of the possibility of collision with an obstacle, and the brake oil is supplied to the brake elements 221 (221a and 221b) after the brake fluid pressure Poil is increased.

In the comparative example shown in Fig. 9, after an automatic-brake activation request is made at a time t1 on the basis of the determination that there is a possibility of collision with an obstacle, until a time t11 at which the braking force is actually generated by: activating the pump motor to increase the brake fluid pressure Poil; and supplying the brake oil to the brake elements such as brake calipers, the idle running time occurs depending on the time lag from the time t1 to the time t11. The obstacle detection range of the ultrasonic sensor is as short as several meters, and this idle running time has a large impact. In other words, in order to avoid collision with the obstacle or reduce the damage in the event of collision by decelerating the vehicle regardless of the presence of the idle running time, the vehicle is required to be stopped or to be, if in a running state, at a low speed such as creep speed, and thus, the intervention speed of the automatic brake is limited.

Contrastively, in the present embodiment as shown in Fig. 8, at a time t0 before the time t1 at which the automatic-brake activation request is made, the pump motor M is activated in response to the determination that the ultrasonic reflection intensity I reaches the first threshold Iths1, and thereby the brake fluid pressure Poil is increased in advance. Although there is a certain amount of time lag between the start of the operation of the pump motor M and the actual increase in the brake fluid pressure Poil, the predetermined increase in the brake fluid pressure Poil can be completed by the time t1 at which the automatic-brake activation request is made, and after the activation request being made at the time t1, the brake fluid pressure Poil can be quickly increased, and the braking force can be actually applied while shortening the idle running time or eliminating the idle running time, and thereby the vehicle can be slowed down.

Secondly, the vehicle speed VSP is detected and the brake fluid pressure Poil is increased only when the vehicle speed VSP is equal to or higher than the predetermined first speed VSP1. Consequently, it is possible to suppress adverse effects caused by preliminarily increasing the brake fluid pressure Poil even when the vehicle speed VSP is relatively low and the impact of the idle running time is inherently small.

For example, in a situation where the braking force can be generated quickly enough to avoid collision despite presence of the idle running time, it is possible to avoid a situation where the vehicle occupants such as the driver and passengers feel uncomfortable due to the noise caused by the operation of the pump motor M.

Thirdly, the first threshold Iths1 is set to be able to change depending on the vehicle speed VSP or the distance D from the own vehicle to the obstacle, and set smaller as the vehicle speed VSP is higher or the distance D is shorter. Under such setting, while decreasing the first threshold Iths1 as the time length until collision with the obstacle is shorter so as to suppress erroneous operation related to preliminary pressurization, it is possible to apply the automatic brake appropriately by increasing the brake fluid pressure Poil at the earliest possible timing, and thereby securing the time required for increase in the brake fluid pressure Poil.

Fourthly, the braking force by the automatic brake control is generated on the condition that the vehicle is traveling at a low vehicle speed VSP equal to or lower than the predetermined second speed VSP2. Consequently, it is possible to accurately detect presence of an obstacle and the possibility of collision with the obstacle by taking advantage of the characteristics of the ultrasonic sensor 211.

Fifthly, the brake fluid pressure Poil is increased when the ultrasonic sensor 211 receives the ultrasonic wave with the reflection intensity I larger than the first threshold Iths1 for the predetermined first number of times Np (i.e., determination reception count Np), and the braking force is actually applied when the ultrasonic sensor 211 receives the ultrasonic wave with the reflection intensity I larger than the second threshold Iths2 for the predetermined second number of times Ns (i.e., determination reception count Ns). Consequently, it is possible to maintain redundancy in determination related to increase in the brake fluid pressure Poil and generation of the braking force, and thus avoid a situation where the brake fluid pressure Poil is erroneously increased and/or the braking force is erroneously generated due to erroneous detection of the ultrasonic reflection intensity I or erroneous determination in comparison with the threshold Iths1 and/or Iths2.

Sixthly, the first number of times Np (i.e., determination reception count Np) is set to be equal to or smaller than the second number of times Ns (i.e., determination reception count Ns), and consequently, it is possible to increase the brake fluid pressure Poil at an earlier timing and thus suppress the delay time until actual application of the braking force, even when detection of an obstacle is delayed and/or an obstacle is detected at a close position due to a sudden factor such as rush-out of a pedestrian.

Seventhly, the first number of times Np (i.e., determination reception count Np) is set as a variable parameter depending on the time length until the vehicle reaches the obstacle, and is set smaller as the time length until reaching the obstacle is shorter (for example, as the vehicle speed VSP is higher or as the distance D from the own vehicle to the obstacle is shorter). Consequently, while suppressing the erroneous operation of the pump motor M and unnecessary increase in the brake fluid pressure Poil due to erroneous detection of the ultrasonic reflection intensity I or erroneous determination in comparison with the first threshold Iths1, it is possible to increase the brake fluid pressure Poil at the earliest possible timing (i.e., the timing at which there is comparatively a certain length of time left until reaching the obstacle).

Further, when the time length until reaching the obstacle is longer than a predetermined time, for example, when the distance D from the vehicle to the obstacle is longer than the distance D22, the first number of times Np and the second number of times Ns (i.e., determination reception counts Np and Ns) is set as the same number of times N3. Consequently, when an obstacle is detected at a position relatively far from the obstacle, it is possible to ensure redundancy in determination, and thus avoid a situation where the brake fluid pressure Poil is unnecessarily increased or the braking force is erroneously generated due to erroneous detection of the ultrasonic reflection intensity I or erroneous determination in comparison with the threshold Iths1 and/or Iths2.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention as defined by the appended claims. The accompanying claims and their equivalents are intended to cover such forms or modifications as would fall within the scope of the invention.

### REFERENCE SIGNS LIST

- 1: vehicle control apparatus
- 2: automatic brake controller of a vehicle
- 21: brake master cylinder
- 22: brake booster
- 23: brake pedal
- 101: engine controller
- 111: accelerator sensor
- 112: air flow meter
- 121: fuel injector
- 201: brake controller
- 202: fluid-pressure control unit
- 203: interface device (meter device)
- 211: ultrasonic sensor
- 212: brake sensor
- 213: wheel speed sensor
- 214: acceleration sensor
- 215: fluid pressure sensor
- 221, 221a, 221b: brake element (brake caliper)
- 222a, 222b: brake disc
- 231 to 236: fluid pressure line
- 241 to 246: fluid pressure control valve
- 251 to 253: check valve

## Claims

1. An automatic brake controller for a vehicle (2) comprising:
an ultrasonic sensor (211) to be mounted on a vehicle and configured to emit an ultrasonic wave in a traveling direction of the vehicle toward an obstacle; and
an automatic brake unit (201, 202, 221) configured to automatically generate braking force of the vehicle based on reflection intensity of the ultrasonic wave detected by the ultrasonic sensor (211),
**characterized in that** the automatic brake unit (201, 202, 221) includes:
a pre-boosting unit (201) configured to increase brake fluid pressure related to generation of the braking force or activate a pump motor related to adjustment of the brake fluid pressure, when the reflection intensity is larger than a predetermined first threshold; and
a brake activation unit (201) configured to actually generate the braking force when the reflection intensity is larger than a predetermined second threshold that is larger than the first threshold.

2. The automatic brake controller of a vehicle (2) according to claim 1, wherein the automatic brake unit (201, 202, 221) is configured to increase the brake fluid pressure or activate the pump motor by the pre-boosting unit (201) on condition that vehicle speed of the vehicle is equal to or higher than a predetermined first speed.

3. The automatic brake controller of a vehicle (2) according to claim 1, further comprising a vehicle speed sensor (213) configured to detect vehicle speed of the vehicle,
wherein the automatic brake unit (201, 202, 221) is configured to
determine whether the vehicle speed detected by the vehicle speed sensor (213) is equal to or higher than a predetermined first speed; and
increase the brake fluid pressure or activate the pump motor by the pre-boosting unit (201) in a case where the detected vehicle speed is determined to be equal to or higher than the first speed.

4. The automatic brake controller of a vehicle (2) according to any one of claim 1 to claim 3, wherein the first threshold is set to decrease as vehicle speed of the vehicle increases or as distance to the obstacle from the vehicle decreases.

5. The automatic brake controller of a vehicle (2) according to any one of claim 1 to claim 4, wherein the automatic brake unit (201, 202, 221) is configured to generate the braking force by the brake activation unit (201) on condition that vehicle speed of the vehicle is equal to or lower than a predetermined second speed.

6. The automatic brake controller of a vehicle (2) according to any one of claim 1 to claim 4, further comprising a vehicle speed sensor (213) configured to detect vehicle speed of the vehicle,
wherein the automatic brake unit (201, 202, 221) is configured to
determine whether the vehicle speed detected by the vehicle speed sensor (213) is equal to or lower than a predetermined second speed; and
generate the braking force by the brake activation unit (201) in a case where the detected vehicle speed is determined to be equal to or lower than the second speed.

7. The automatic brake controller of a vehicle (2) according to any one of claim 1 to claim 6, wherein:
the pre-boosting unit (201) is configured to increase the brake fluid pressure or activate the pump motor, in a case of receiving an ultrasonic wave with reflection intensity larger than the first threshold for a predetermined first number of times by the ultrasonic sensor (211); and
the brake activation unit (201) is configured to generate the braking force in a case of receiving an ultrasonic wave with reflection intensity larger than the second threshold for a predetermined second number of times by the ultrasonic sensor (211).

8. The automatic brake controller of a vehicle (2) according to claim 7, wherein the first number of times is equal to or smaller than the second number of times.

9. The automatic brake controller of a vehicle (2) according to claim 8, wherein:
the first number of times is set to decrease as time length taken until the vehicle reaches the obstacle decreases; and
the first number of times is set to be equal to the second number of times when the time length taken until the vehicle reaches the obstacle is longer than a predetermined time length.

## Patentansprüche

1. Automatische-Bremse-Steuereinheit für ein Fahrzeug (2), umfassend:
einen Ultraschallsensor (211), um an einem Fahrzeug angebracht und dazu eingerichtet zu sein, eine Ultraschallwelle in einer Fahrtrichtung des Fahrzeugs in Richtung eines Hindernisses zu emittieren; und
eine Automatische-Bremse-Einheit (201, 202, 221), welche dazu eingerichtet ist, automatisch eine Bremskraft des Fahrzeugs auf Grundlage einer Reflektionsintensität der Ultraschallwelle zu generieren, welche durch den Ultraschallsensor gemessen (211) ist,
**dadurch gekennzeichnet, dass** die Automatische-Bremse-Einheit (201, 202, 221) umfasst:
eine Vorverstärkungseinheit (201), welche dazu eingerichtet ist, einen Bremsfluiddruck zu erhöhen, welcher mit einer Generierung der Bremskraft verbunden ist, oder einen Pumpenmotor zu aktivieren, welcher mit einer Anpassung des Bremsfluiddrucks verbunden ist, wenn die Reflektionsintensität größer als ein vorbestimmter erster Schwellenwert ist; und
eine Bremsenaktivierungseinheit (201), welche dazu eingerichtet ist, die Bremskraft tatsächlich zu generieren, wenn die Reflektionsintensität größer als ein vorbestimmter zweiter Schwellenwert ist, welcher größer als der erste Schwellenwert ist.

2. Automatische-Bremse-Steuereinheit eines Fahrzeugs (2) nach Anspruch 1, wobei die Automatische-Bremse-Einheit (201, 202, 221) dazu eingerichtet ist, durch die Vorverstärkungseinheit (201) den Bremsfluiddruck zu erhöhen oder den Pumpenmotor zu aktivieren, bei einer Bedingung, dass eine Fahrzeuggeschwindigkeit des Fahrzeugs gleich oder höher als eine vorbestimmte erste Geschwindigkeit ist.

3. Automatische-Bremse-Steuereinheit eines Fahrzeugs (2) nach Anspruch 1, ferner umfassend einen Fahrzeuggeschwindigkeitssensor (213), welcher dazu eingerichtet ist, eine Fahrzeuggeschwindigkeit des Fahrzeugs zu detektieren,
wobei die Automatische-Bremse-Einheit (201, 202, 221) dazu eingerichtet ist,
zu bestimmen, ob die Fahrzeuggeschwindigkeit, welche durch den Fahrzeuggeschwindigkeitssensor (213) detektiert ist, gleich oder höher als eine vorbestimmte erste Geschwindigkeit ist; und
durch die Vorverstärkungseinheit (201) den Bremsfluiddruck zu erhöhen oder den Pumpenmotor in einem Fall zu aktivieren, in welchem die detektierte Fahrzeuggeschwindigkeit bestimmt ist, gleich oder höher als die erste Geschwindigkeit zu sein.

4. Automatische-Bremse-Steuereinheit eines Fahrzeugs (2) nach einem der Ansprüche 1 bis 3, wobei der erste Schwellenwert festgelegt ist, um abzunehmen, wenn eine Fahrzeuggeschwindigkeit des Fahrzeugs steigt oder wenn eine Distanz zu dem Hindernis von dem Fahrzeug abnimmt.

5. Automatische-Bremse-Steuereinheit eines Fahrzeugs (2) nach einem der Ansprüche 1 bis 4, wobei die Automatische-Bremse-Einheit (201, 202, 221) dazu eingerichtet ist, die Bremskraft durch die Bremsenaktivierungseinheit (201) bei einer Bedingung zu generieren, dass eine Fahrzeuggeschwindigkeit des Fahrzeugs gleich oder geringer als eine vorbestimmte zweite Geschwindigkeit ist.

6. Automatische-Bremse-Steuereinheit eines Fahrzeugs (2) nach einem der Ansprüche 1 bis 4, ferner umfassend einen Fahrzeuggeschwindigkeitssensor (213), welcher dazu eingerichtet ist, eine Fahrzeuggeschwindigkeit des Fahrzeugs zu detektieren,
wobei die Automatische-Bremse-Einheit (201, 202, 221) dazu eingerichtet ist,
zu bestimmen, ob die Fahrzeuggeschwindigkeit, welche durch den Fahrzeuggeschwindigkeitssensor (213) detektiert ist, gleich oder geringer als eine vorbestimmte zweite Geschwindigkeit ist; und
die Bremskraft durch die Bremsenaktivierungseinheit (201) in einem Fall zu generieren, in welchem die detektierte Fahrzeuggeschwindigkeit bestimmt ist, gleich oder geringer als die zweite Geschwindigkeit zu sein.

7. Automatische-Bremse-Steuereinheit eines Fahrzeugs (2) nach einem der Ansprüche 1 bis 6, wobei:
die Vorverstärkungseinheit (201) dazu eingerichtet ist, den Bremsfluiddruck zu erhöhen oder den Pumpenmotor zu aktivieren, in einem Fall eines Empfangens einer Ultraschallwelle mit einer Reflektionsintensität, welche größer als der erste Schwellenwert ist, für eine vorbestimmte erste Anzahl von Malen durch den Ultraschallsensor (211); und
die Bremsenaktivierungseinheit (201) dazu eingerichtet ist, die Bremskraft zu generieren, in einem Fall eines Empfangens einer Ultraschallwelle mit einer Reflektionsintensität, welche größer als der zweite Schwellenwert ist, für eine vorbestimmte zweite Anzahl von Malen durch den Ultraschallsensor (211).

8. Automatische-Bremse-Steuereinheit eines Fahrzeugs (2) nach Anspruch 7, wobei die erste Anzahl von Malen gleich oder kleiner als die zweite Anzahl von Malen ist.

9. Automatische-Bremse-Steuereinheit eines Fahrzeugs (2) nach Anspruch 8, wobei:
die erste Anzahl von Malen festgelegt ist, um abzunehmen, wenn eine Zeitdauer, welche aufgenommen ist, bis das Fahrzeug das Hindernis erreicht, abnimmt; und
die erste Anzahl von Malen festgelegt ist, um gleich der zweiten Anzahl von Malen zu sein, wenn die Zeitdauer, welche aufgenommen ist, bis das Fahrzeug das Hindernis erreicht, länger als eine vorbestimmte Zeitdauer ist.

## Revendications

1. Dispositif de commande de frein automatique pour un véhicule (2) comprenant :
un capteur à ultrasons (211) à monter sur un véhicule et configuré pour émettre une onde ultrasonore dans une direction de déplacement du véhicule vers un obstacle ; et
une unité de freinage automatique (201, 202, 221) configurée pour générer automatiquement une force de freinage du véhicule sur la base de l'intensité de réflexion de l'onde ultrasonore détectée par le capteur ultrasonore (211),
**caractérisé en ce que** l'unité de freinage automatique (201, 202, 221) comporte :
une unité de préamplification (201) configurée pour augmenter la pression de liquide de frein liée à la génération de la force de freinage ou activer un moteur de pompe lié au réglage de la pression de liquide de frein, lorsque l'intensité de réflexion est supérieure à un premier seuil prédéterminé ; et
une unité d'activation de frein (201) configurée pour générer effectivement la force de freinage lorsque l'intensité de réflexion est supérieure à un second seuil prédéterminé qui est supérieur au premier seuil.

2. Dispositif de commande de frein automatique d'un véhicule (2) selon la revendication 1, dans lequel l'unité de freinage automatique (201, 202, 221) est configurée pour augmenter la pression de liquide de frein ou activer le moteur de pompe par l'unité de préamplification (201) à condition que la vitesse du véhicule soit égale ou supérieure à une première vitesse prédéterminée.

3. Dispositif de commande de frein automatique d'un véhicule (2) selon la revendication 1, comprenant en outre un capteur de vitesse du véhicule (213) configuré pour détecter la vitesse du véhicule,
dans lequel l'unité de freinage automatique (201, 202, 221) est configurée pour déterminer si la vitesse du véhicule détectée par le capteur de vitesse du véhicule (213) est égale ou supérieure à une première vitesse prédéterminée ; et
augmenter la pression de liquide de frein ou activer le moteur de pompe par l'unité de préamplification (201) dans le cas où la vitesse du véhicule détectée est déterminée comme étant égale ou supérieure à la première vitesse.

4. Dispositif de commande de frein automatique d'un véhicule (2) selon l'une quelconque des revendications 1 à 3, dans lequel le premier seuil est réglé pour diminuer à mesure que la vitesse du véhicule augmente ou que la distance à l'obstacle par rapport au véhicule diminue.

5. Dispositif de commande de frein automatique d'un véhicule (2) selon l'une quelconque des revendications 1 à 4, dans lequel l'unité de frein automatique (201, 202, 221) est configurée pour générer la force de freinage par l'unité (201) d'activation de frein à condition que la vitesse du véhicule soit égale ou inférieure à une seconde vitesse prédéterminée.

6. Dispositif de commande de frein automatique d'un véhicule (2) selon l'une quelconque des revendications 1 à 4, comprenant en outre un capteur de vitesse du véhicule (213) configuré pour détecter la vitesse du véhicule,
dans lequel l'unité de freinage automatique (201, 202, 221) est configurée pour
déterminer si la vitesse du véhicule détectée par le capteur de vitesse du véhicule (213) est égale ou inférieure à une seconde vitesse prédéterminée ; et
générer la force de freinage par l'unité d'activation de frein (201) dans un cas où la vitesse de véhicule détectée est déterminée comme étant égale ou inférieure à la seconde vitesse.

7. Dispositif de commande de frein automatique d'un véhicule (2) selon l'une quelconque des revendications 1 à 6, dans lequel :
l'unité de préamplification (201) est configurée pour augmenter la pression de liquide de frein ou activer le moteur de pompe, dans le cas de la réception d'une onde ultrasonore avec une intensité de réflexion supérieure au premier seuil pendant un premier nombre prédéterminé de fois par le capteur ultrasonore (211) ; et
l'unité d'activation de frein (201) est configurée pour générer la force de freinage dans le cas d'une réception d'une onde ultrasonore avec une intensité de réflexion supérieure au second seuil pendant un second nombre de fois prédéterminé par le capteur ultrasonore (211).

8. Dispositif de commande de frein automatique d'un véhicule (2) selon la revendication 7, dans lequel le premier nombre de fois est égal ou inférieur au second nombre de fois.

9. Dispositif de commande de frein automatique d'un véhicule (2) selon la revendication 8, dans lequel :
le premier nombre de fois est réglé pour diminuer à mesure que la durée nécessaire pour que le véhicule atteigne l'obstacle diminue ; et
le premier nombre de fois est réglé pour être égal au second nombre de fois lorsque la durée prise jusqu'à ce que le véhicule atteigne l'obstacle est supérieure à une durée prédéterminée.
